(19) Europäisches Patentamt
European Patent Office
Office européen des brevets

(11) Veröffentlichungsnummer: **0 322 624**
**A1**

(12) # EUROPÄISCHE PATENTANMELDUNG

(21) Anmeldenummer: **88120751.8**

(22) Anmeldetag: **12.12.88**

(51) Int. Cl.4: **C08G 18/81 , C08G 18/50 , H01B 3/30**

(30) Priorität: **23.12.87 DE 3743995**

(43) Veröffentlichungstag der Anmeldung: **05.07.89 Patentblatt 89/27**

(84) Benannte Vertragsstaaten: **DE FR GB IT**

(71) Anmelder: **Siemens Aktiengesellschaft Berlin und München**
**Wittelsbacherplatz 2**
**D-8000 München 2(DE)**

(72) Erfinder: **Birkle, Siegfried, Dr.**
**Veit-Stoss-Strasse 46**
**D-8552 Höchstadt(DE)**
Erfinder: **Feucht, Hans-Dieter, Dr.**
**Eschenweg 7**
**D-7253 Renningen 2(DE)**
Erfinder: **Rissel, Eva-Maria**
**Lindenweg 19**
**D-8550 Forchheim(DE)**

(54) **Flüssiges, strahlenhärtbares Harz zur Isolierung dünner Leitungen.**

(57) Zur Isolierung dünner Leitungen verwendete Harze sollen eine hohe Strahlenempfindlichkeit aufweisen und bei Applikationstemperatur flüssig sein; sie sollen ferner die Herstellung dielektrisch hochwertiger Isolationen ermöglichen.

Dies wird durch ein Harz erreicht, das ein Reaktionsprodukt von Isocyanatoalkyl-(meth)acrylat, Isocyanatoaryl- (meth)acrylat oder einem 1:1-Addukt aus einem Hydroxyalkyl-(meth)acrylat und einem Diisocyanat mit einem difunktionellen perfluorierten Polyether folgender Struktur:

$$X\text{-}CF_2\text{-}O\text{-}(CF_2\text{-}CF_2\text{-}O)_m\text{-}(CF_2\text{-}O)_n\text{-}CF_2\text{-}X$$

mit einem mittleren Molekulargewicht zwischen 500 und 10000 ist, wobei folgendes gilt:
X = $CH_2OH$, m > m, n > 2.
Isolation für dünne Leitungen

EP 0 322 624 A1

# Flüssiges, strahlenhärtbares Harz zur Isolierung dünner Leitungen

Die Erfindung betrifft ein flüssiges, strahlenhärtbares Harz zur Isolierung dünner Leitungen, eine daraus hergestellte Isolation und eine dünne Leitung mit dieser Isolation.

Dünne isolierte elektrische Leitungen, d.h. Leitungen mit einem Durchmesser ≦ 100 µm, finden vor allem in der Steuerungs- und Nachrichtentechnik Verwendung. Derartige Leitungen benötigen eine dielektrisch hochwertige Isolation. Die Isolierung der Leitungen, d.h. das Aufbringen der Kunststoff-Isolation, kann beispielsweise durch Extrusion erfolgen, wobei Thermoplaste verwendet werden. Von Nachteil ist dabei aber, daß in der Regel die mechanische Festigkeit der Leitungen nicht ausreichend ist.

Geringere Ansprüche an die mechanische Festigkeit der Leitungen ergeben sich dann, wenn diese in einer Küvette mit einem Flüssigharz beschichtet werden, das nachfolgend einer Strahlenhärtung unterworfen wird. Hierzu fehlt es bislang aber an geeigneten Harzen mit den erforderlichen Eigenschaften, wie Strahlenhärtbarkeit.

Aufgabe der Erfindung ist es, ein zur Isolierung dünner Leitungen geeignetes Harz anzugeben, das eine hohe Strahlenempfindlichkeit aufweist und bei Applikationstemperatur flüssig, d.h. im wesentlichen frei von Lösungsmittel ist, und das die Herstellung von dielektrisch hochwertigen Isolationen ermöglicht.

Dies wird erfindungsgemäß dadurch erreicht, daß das Harz ein Reaktionsprodukt von Isocyanatoalkyl-(meth)acrylat, Isocyanatoaryl-(meth)acrylat oder einem 1:1-Addukt aus einem Hydroxy alkyl-(meth)acrylat und einem Diisocyanat mit einem difunktionellen perfluorierten Polyether folgender Struktur:

$$X\text{-}CF_2\text{-}O\text{-}(CF_2\text{-}CF_2\text{-}O)_m\text{-}(CF_2\text{-}O)_n\text{-}CF_2\text{-}X \qquad (I)$$

mit einem mittleren Molekulargewicht zwischen 500 und 10000 ist, wobei folgendes gilt:
$X = CH_2OH$, $m > 2$, $n > 2$.

Der dem erfindungsgemäßen Harz zugrundeliegende perfluorierte Polyether besitzt vorzugsweise ein mittleres Molekulargewicht zwischen 1000 und 5000. Das Isocyanatoalkyl-(meth)acrylat ist vorzugsweise Isocyanatoethyl-methacrylat; das Diisocyanat ist vorzugsweise Isophorondiisocyanat (IPDI), es kann beispielsweise aber auch ein Toluylendiisocyanat sein.

Der Polyether, der pro Polymermolekül zwei reaktive Endgruppen aufweist, wird (a) mit Isocyanatoalkylacrylat oder -methacrylat bzw. den entsprechenden Aryl-Verbindungen oder (b) mit einem 1:1-Addukt von Hydroxyalkyl-acrylat bzw. -methacrylat an ein Diisocyanat zur Reaktion gebracht, wobei - unter Ankopplung strahlenhärtbarer Gruppen - die strahlenhärtbaren Harze gebildet werden, und zwar in folgender Weise:

(a)

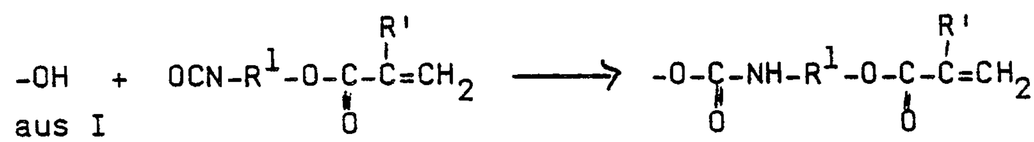


$R' = H, CH_3$
$R^1$ = Alkylen, Arylen

(b) 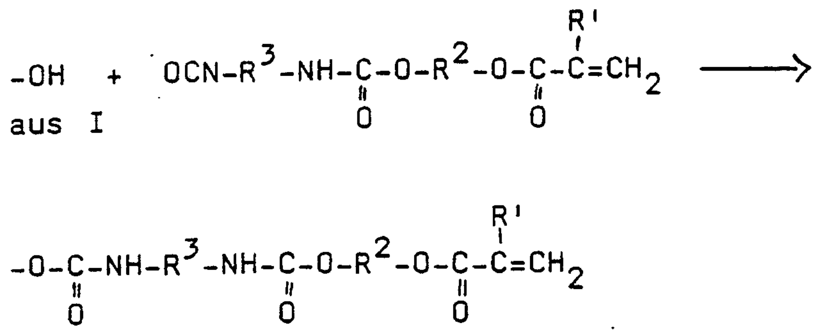


$R' = H, CH_3$
$R^2$ = Alkylen
$R^3$ = Rest aus Diisocyanat, z.B.: 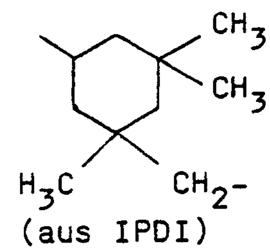
(aus IPDI)

Zur Herstellung der erfindungsgemäßen Harze dienen sehr reine Ausgangsverbindungen, d.h. Substanzen mit einer niedrigen Dielektrizitätszahl. Aufgrund dieser Tatsache und aufgrund des speziellen Aufbauprinzips, wonach nur Additionsreaktionen erfolgen, bei denen keine - die Dielektrizitätszahl nachteilig beeinflussenden - Nebenprodukte entstehen, fallen die erfindungsgemäßen Harze sehr rein an, und zwar ohne aufwendige Reinigungsoperationen. Die aus diesen Harzen durch Strahlenhärtung hergestellten Isolationen sind deshalb dielektrisch hochwertig, d.h. sie weisen eine Dielektrizitätszahl $E_r < 4$ auf und der dielektrische Verlustfaktor $\tan\delta$ ist annähernd $10^{-2}$.

Die erfindungsgemäßen Harze sind flüssig, d.h. sie können lösungsmittelfrei verarbeitet werden, darüber hinaus sind sie hochempfindlich gegenüber Strahlung, wie Elektronen- und UV- Strahlung. Die strahlenhärtbaren Gruppen zeichnen sich dabei insbesondere durch eine hohe Reaktivität gegenüber Elektronenstrahlen einer Energie von 5 keV bis 1 MeV aus; sie üben außerdem keinen negativen Einfluß auf die Dielektrizitätszahl aus.

Aus der EP-A-0 174 494 ist ein thermostabiles, durch Bestrahlung vernetzbares Polymersystem bekannt, das lineare Fluorpoly mere mit mindestens zwei reaktiven Endgruppen pro Polymermolekül als Ausgangsstoffe für die Umsetzung mit strahlungsempfindlichen Substanzen aufweist. Dieses Polymersystem wird für mikroelektronische Anwendungen eingesetzt, d.h. es findet bei der Herstellung von Mehrlagen-Leiterplatten bzw. gedruckten Mehrlagenverdrahtungen Verwendung. Es konnte aber nicht vorhergesehen werden, daß sich aus der Vielzahl der bekannten Polymersysteme ein spezielles System zur Isolierung dünner Leitungen eignet. Dies insbesondere auch deshalb, weil für diesen Zweck ein flüssiges Harz erforderlich ist, während die bekannten Polymersysteme in Form von Folien oder von Lösungen (in geeigneten Lösungsmitteln) zum Einsatz gelangen.

Anhand von Ausführungsbeispielen soll die Erfindung noch näher erläutert werden.

Zur Herstellung eines flüssigen, strahlenhärtbaren Harzes nach der Erfindung werden in einen mit Argon gefluteten 500 ml- Dreihalskolben (mit Innenthermometer, Rührer und Tropftrichter mit Trockenrohr) 200 g eines im Handel erhältlichen perfluorierten Polyetherdiols mit endständigen $CH_2OH$-Gruppen und einem mittleren Molekulargewicht von ca. 2000 (entsprechend 0,2 mol OH) und ca. 3,5 ml einer Dibutylzinndilauratlösung (10 g in 100 ml $CHCl_3$) als Katalysator gegeben. Unter Rühren werden dazu 31 g (0,2 mol) Isocyanatoethyl-methacrylat getropft, wobei die Reaktionstemperatur nicht über 30 °C ansteigen darf. Der Reaktionsverlauf wird durch Bestimmung des NC0-Gehaltes verfolgt. Nach 24 h sind die Isocyanatgruppen vollständig umgesetzt. Es werden ca. 230 g eines leicht opalisierenden Flüssigharzes mit einer Viskosität von 350 mPa.s (bei 25 °C) erhalten.

Aus dem Flüssigharz werden Folien mit einer Schichtdicke von ca. 350 µm gegossen und mit Elektronenstrahlen gehärtet. Die Bestrahlung erfolgt mit einer Beschleunigungsspannung von 1 MeV unter Stickstoff. Bei einer Bestrahlungsdosis von 25 kGy sind die Folien vollständig ausgehärtet. Diese Folien sind klar, elastisch und biegbar, und sie weisen eine Reißdehnung von ca. 30 % auf; die Dielektrizitätszahl $E_r$ beträgt 3,6 und der dielektrische Verlustfaktor $\tan\delta$ $3{,}1.10^{-2}$ (gemessen nach DIN 53483; 100 V, 50 Hz).

Das Flüssigharz kann mittels einer Beschichtungsküvette auf dünne Leitungen aufgebracht und elektronenstrahlgehärtet werden. Derartige Isolierungen mit einer Dicke ≤100 µm sind von Aluminium und Kupfer

gut abisolierbar.

## Ansprüche

1. Flüssiges, strahlenhärtbares Harz zur Isolierung dünner Leitungen, **dadurch gekennzeichnet,** daß es ein Reaktionsprodukt von Isocyanatoalkyl-(meth)acrylat, Isocyanatoaryl-(meth)acrylat oder einem 1:1-Addukt aus einem Hydroxyalkyl-(meth)acrylat und einem Diisocyanat mit einem difunktionellen perfluorierten Polyether folgender Struktur:

$$X\text{-}CF_2\text{-}O\left(CF_2CF_2\text{-}O\right)_m\left(CF_2\text{-}O\right)_n CF_2\text{-}X$$

mit einem mittleren Molekulargewicht zwischen 500 und 10000 ist, wobei folgendes gilt:
$X = CH_2OH$, $m > 2$, $n > 2$.

2. Flüssiges, strahlenhärtbares Harz nach Anspruch 1, **dadurch gekennzeichnet,** daß der Polyether ein mittleres Molekulargewicht zwischen 1000 und 5000 besitzt.

3. Flüssiges, strahlenhärtbares Harz nach Anspruch 1 oder 2, **dadurch gekennzeichnet,** daß das Isocyanatoalkyl-(meth)acrylat Isocyanatoethyl-methacrylat ist.

4. Flüssiges, strahlenhärtbares Harz nach einem der Ansprüche 1 bis 3, **dadurch gekennzeichnet,** daß das Diisocyanat Isophorondiisocyanat ist.

5. Isolation für dünne Leitungen, **dadurch gekennzeichnet,** daß sie aus wenigstens einem strahlengehärteten Harz nach einem oder mehreren der Ansprüche 1 bis 4 besteht.

6. Dünne Leitung, **gekennzeichnet** durch eine Isolation nach Anspruch 5.

Europäisches Patentamt

# EUROPÄISCHER RECHERCHENBERICHT

Nummer der Anmeldung

EP 88 12 0751

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 453 871 (M.M.M.)<br>* Ansprüche 1,7; Seite 3, Zeilen 1-31; Seite 6, Zeile 19 - Seite 7, Zeile 21 *<br>--- | 1 | C 08 G 18/81<br>C 08 G 18/50<br>H 01 B 3/30 |
| A | US-A-3 972 856 (R.A. MITSCH et al.)<br>* Ansprüche 1,8; Spalte 3, Zeilen 50-59 *<br>----- | 1 | |

RECHERCHIERTE SACHGEBIETE (Int. Cl.4)

C 08 G
H 01 B

Der vorliegende Recherchenbericht wurde für alle Patentansprüche erstellt

| Recherchenort | Abschlußdatum der Recherche | Prüfer |
|---|---|---|
| DEN HAAG | 03-04-1989 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)